(19) Europäisches Patentamt / European Patent Office / Office européen des brevets

(11) **EP 4 107 545 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **21721872.6**

(22) Anmeldetag: **16.04.2021**

(51) Internationale Patentklassifikation (IPC):
*G01S 7/41* (2006.01)    *G01S 7/48* (2006.01)
*G01S 15/52* (2006.01)    *G01S 7/539* (2006.01)
*G01S 13/536* (2006.01)    *G01S 13/58* (2006.01)
*G01S 13/60* (2006.01)    *G01S 15/58* (2006.01)
*G01S 15/60* (2006.01)    *G01S 17/58* (2006.01)
*B61L 15/00* (2006.01)    *B61L 23/04* (2006.01)
*B61L 25/02* (2006.01)

(52) Gemeinsame Patentklassifikation (CPC):
**G01S 13/583; B61L 23/041; B61L 25/021; G01S 7/415; G01S 13/536; G01S 13/60; G01S 15/52; G01S 15/586; G01S 15/60; G01S 17/58;** B61L 15/0072; G01S 7/41; G01S 7/4802; G01S 7/539

(86) Internationale Anmeldenummer:
**PCT/EP2021/059876**

(87) Internationale Veröffentlichungsnummer:
**WO 2021/239326 (02.12.2021 Gazette 2021/48)**

(54) **VERFAHREN ZUM SCHÄTZEN EINER EIGENGESCHWINDIGKEIT**

METHOD FOR ESTIMATING AN INTRINSIC SPEED

PROCÉDÉ D'ESTIMATION D'UNE VITESSE INTRINSÈQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2020 DE 102020206771**

(43) Veröffentlichungstag der Anmeldung:
**28.12.2022 Patentblatt 2022/52**

(73) Patentinhaber: **Siemens Mobility GmbH**
**81739 München (DE)**

(72) Erfinder:
• **SEIDEL, Christoph**
**81827 München (DE)**
• **WEISS, Kristian**
**13187 Berlin (DE)**

(74) Vertreter: **Siemens Patent Attorneys**
**Postfach 22 16 34**
**80506 München (DE)**

(56) Entgegenhaltungen:
EP-A2- 0 932 052    DE-A1- 102012 200 139
DE-A1- 102015 116 434    DE-A1- 102017 211 432
JP-A- 2019 007 926

**Beschreibung**

Die Erfindung betrifft ein Verfahren zum Schätzen einer Eigengeschwindigkeit, ein Computerprogrammprodukt und eine Vorrichtung zum Schätzen einer Eigengeschwindigkeit.

Im Stand der Technik ist es beispielsweise aus Instantaneous Ego-Motion Estimation using Doppler Radar, Proceedings of the 16th International IEEE Annual Conference on Intelligent Transportation Systems, The Hague, The Netherlands, October 6-9, 2013, pages 869 to 874 bekannt, eine Dopplerradarmessung zur Schätzung einer Eigengeschwindigkeit eines Eigenfahrzeuges zu verwenden.

DE 10 2012 200 139 A1 offenbart ein Verfahren zum Bestimmen der Geschwindigkeit eines Fahrzeugs, insbesondere eines Schienenfahrzeugs. Dabei wird wenigstens ein in der Umgebung des Fahrzeugs befindliches Objekt mithilfe eines oder mehrerer Sensoren, insbesondere eines FMCW-Radars, erfasst und eine Relativgeschwindigkeit des erfassten Objekts in Bezug auf das Fahrzeug gemessen. Ferner wird die eigene Geschwindigkeit des Fahrzeugs anhand der Relativgeschwindigkeit zu den erfassten Objekten, insbesondere zu den stationären Objekten, bestimmt. Die Bewertung als stationäres Objekt oder als nicht stationäres bzw. bewegtes Objekt erfolgt durch einen Vergleich der gemessenen Relativgeschwindigkeit eines Objekts mit einem geeigneten Referenzwert, beispielsweise dem zuletzt ermittelten Wert der Fahrgeschwindigkeit des Fahrzeugs.

DE 10 2015 116 434 A1 betrifft ein Verfahren zur Schätzung der Eigengeschwindigkeit eines Kraftfahrzeugs mit einem Radarsensor zur Überwachung der Umgebung des Kraftfahrzeugs, wobei ein Fehlerfaktor einer Geschwindigkeitsmessung auf Basis einer Beobachtung stehender Ziele, insbesondere einer Randbebauung, durchgeführt wird, wobei eine Randbebauungsschätzung vorgenommen wird mit einer Abstandsschätzung des Fahrzeugs von der Randbebauung, woraus ein Winkelmessfehler der Bestimmung des Sichtwinkels eines stehenden Ziels abgeschätzt wird, woraus ein Fehler der Geschwindigkeit abgeschätzt wird.

JP 2019 007926 A offenbart einen Detektor zur Erfassung einer eigenen Geschwindigkeit eines Fahrzeugs. Der Detektor ist an einer Fahrzeugkarosserie angebracht, um eine Sendewelle nach vorn abzustrahlen und eine reflektierte Welle zu empfangen, um ein Ziel zu erfassen sowie auf Grundlage der Doppler-Verschiebung der reflektierten Welle eine Geschwindigkeit des eigenen Fahrzeugs zu schätzen.

DE 10 2017 211 432 A1 zeigt ein System zum Detektieren eines bewegten Objekts. Es weist eine Radarvorrichtung auf, die wenigstens ein vom Objekt reflektiertes Signal unter wenigstens einem Winkel empfängt. Eine Verarbeitungseinrichtung ermittelt wenigstens eine Relativgeschwindigkeit und wenigstens einen Winkel für jede ermittelte Relativgeschwindigkeit zwischen der Radarvorrichtung und dem Objekt. Mittels der Verarbeitungseinrichtung ist eine Mikrodoppleranalyse für die vom Objekt empfangenen Signale durchführbar, wobei die Mikrodoppleranalyse anhand von für die empfangenen Signale bestimmten Winkel durchgeführt wird. Mittels der durchgeführten Mikrodoppleranalyse ist ein Typ des Objekts ermittelbar.

Die Aufgabe der Erfindung besteht darin, ein verbessertes Verfahren zum Schätzen einer Eigengeschwindigkeit bereitzustellen.

Die Aufgabe wird gelöst durch ein Verfahren zum Schätzen einer Eigengeschwindigkeit eines Egoobjekts gemäß Anspruch 1, ein Computerprogrammprodukt gemäß Anspruch 11 und eine Vorrichtung zum Schätzen einer Eigengeschwindigkeit eines Egoobjekts gemäß Anspruch 12. In den abhängigen Ansprüchen werden weitere Ausführungsformen des Verfahrens beschrieben.

Ein Vorteil des vorgeschlagenen Verfahrens besteht darin, dass die Schätzung der Eigengeschwindigkeit verbessert wird. Dies wird dadurch erreicht, dass die empfangenen Strahlen in der Weise gefiltert werden, dass die empfangenen Strahlen präziser die tatsächliche Eigengeschwindigkeit beschreiben. Dazu werden die empfangenen Strahlen dahingehend überprüft, ob die Strahlen von einem stehenden oder sich bewegenden Objekt reflektiert wurden. Für die Schätzung der Eigengeschwindigkeit werden die Strahlen verwendet, die von stehenden Objekten reflektiert wurden. Als Strahlen können z.B. akustische Strahlen, d.h. Schallwellen, oder elektromagnetische Strahlen, d.h. elektromagnetische Wellen, wie z.B. Radiowellen oder Laserstrahlung oder Lichtstrahlung verwendet werden.

Dies kann beispielsweise dadurch erreicht werden, dass mit Hilfe eines geographischen Matchingverfahrens und/oder mit Hilfe eines zeitlichen Matchingverfahrens die empfangenen Strahlen ermittelt werden, die von stehenden Objekten reflektiert wurden. Die ermittelten Strahlen werden für eine Schätzung der Eigengeschwindigkeit verwendet. Aufgrund des geographischen und/oder des zeitlichen Matchingverfahrens werden mit hoher Wahrscheinlichkeit die Strahlen ermittelt, die tatsächlich von stehenden Objekten reflektiert wurden. Dadurch wird die Genauigkeit der Schätzung der Eigengeschwindigkeit verbessert.

Es wird wenigstens ein erster räumlicher Bereich relativ zum Egoobjekt vorgegeben. Empfangene Strahlen, die aus dem ersten Bereich reflektiert wurden, werden nicht zur Schätzung der Eigengeschwindigkeit oder mit geringerer Gewichtung zur Schätzung der Eigengeschwindigkeit verwendet. Die ersten räumlichen Bereiche sind in der Weise ausgewählt, dass in den ersten räumlichen Bereich eine geringe Wahrscheinlichkeit für stehende Objekte gegeben ist. Deshalb ist die Wahrscheinlichkeit für eine fehlerhafte Zuordnung der empfangenen Strahlen aus dem ersten räumlichen Bereich zu einem stehenden Objekt relativ groß. Durch die Verwendung des ersten räumlichen Bereiches wird Rechenaufwand für die Auswertung der empfangenen Strahlen eingespart, da weniger Strahlen überprüft werden. Zudem wird die Wahrscheinlichkeit für eine Fehlschätzung der Eigengeschwindigkeit reduziert.

Erfindungsgemäß sind ein erster weiterer räumlicher Bereich relativ zum Egoobjekt und ein zweiter weiterer räumlicher Bereich relativ zum Egoobjekt vorgesehen. Es wird eine erste Anzahl von reflektierten Strahlen für den ersten weiteren Bereich und eine zweite Anzahl von reflektierten Strahlen für den zweiten weiteren Bereich ermittelt. Die reflektierten Strahlen des ersten weiteren Bereiches werden nicht für die Schätzung der Eigengeschwindigkeit verwendet, wenn die erste Anzahl der Strahlen des ersten weiteren Bereichs mehr als einen Vergleichswert über der zweiten Anzahl des zweiten weiteren Bereichs liegt. Auf diese Weise wird eine relative Häufung von Reflexionen, die in der Regel von Fahrzeugen stammen, ausgeblendet. Auch dadurch wird die Wahrscheinlichkeit erhöht, nur reflektierten Strahlen von stehenden Objekten zu verwenden. Dadurch wird die Schätzung der Eigengeschwindigkeit verbessert.

In einer Ausführungsform des Verfahrens werden mit Hilfe eines räumlichen Filters die empfangenen Strahlen ermittelt, die mit größerer Wahrscheinlichkeit von stehenden Objekten reflektiert wurden. Die ermittelten Strahlen werden für die Schätzung der Eigengeschwindigkeit verwendet. Mit Hilfe des räumlichen Filters kann erreicht werden, dass Strahlen, die nicht von stehenden Objekten reflektiert wurden, herausgefiltert werden. Diese Strahlen werden dann nicht für die Abschätzung der Eigengeschwindigkeit verwendet. Dadurch wird die Qualität der Schätzung der Eigengeschwindigkeit verbessert.

In einer weiteren Ausführungsform wird wenigstens ein zweiter räumlicher Bereich relativ zum Egoobjekt vorgegeben. Empfangene Strahlen, die aus dem zweiten Bereich reflektiert wurden, werden mit größerer Gewichtung zur Schätzung der Eigengeschwindigkeit verwendet als reflektierte Strahlen außerhalb des zweiten Bereiches. Der zweite räumliche Bereich ist in der Weise festgelegt, dass mit hoher Wahrscheinlichkeit stehende Objekte im zweiten räumlichen Bereich angeordnet sind.

Der erste und/oder der zweite räumliche Bereich können entweder von einem Datenspeicher, insbesondere von einer digitalen Karte, bereitgestellt werden, oder mit Hilfe vorausgehender Messungen des Egoobjektes ermittelt werden. Wird beispielsweise bei der Auswertung der empfangenen Strahlen festgestellt, dass in einem ersten Bereich kaum oder keine stehenden Objekte vorhanden sind, kann dieser erste Bereich gemäß dem vorher beschriebenen Verfahren verwendet werden, um bei zukünftigen Messungen, die aus dem ersten Bereich reflektierten Strahlen nicht oder mit geringerer Gewichtung für die Schätzung der Eigengeschwindigkeit zu verwenden. Wird jedoch mit Hilfe von Messungen des Egoobjektes ermittelt, dass in einem zweiten räumlichen Bereich mit großer Wahrscheinlichkeit nur oder im Wesentlichen nur stehende Objekte vorhanden sind, so können bei zukünftigen Messungen Strahlen, die vom zweiten räumlichen Bereich reflektiert wurden, mit einer größeren Gewichtung verwendet werden als Strahlen, die aus Bereichen außerhalb des zweiten räumlichen Bereiches reflektiert wurden.

In einer weiteren Ausführungsform wird wenigstens ein weiterer räumlicher Bereich vorgegeben, wobei die reflektierten Strahlen des weiteren räumlichen Bereiches nicht für die Schätzung der Eigengeschwindigkeit verwendet werden, wenn die Dichte der reflektierten Strahlen über einem vorgegebenen Grenzwert liegt. Auf diese Weise wird eine absolute Dichte von reflektierten Strahlen bei der Berücksichtigung der Schätzung der Eigengeschwindigkeit berücksichtigt. Auch dadurch wird die Wahrscheinlichkeit reduziert, für die Schätzung der Eigengeschwindigkeit Strahlen zu berücksichtigen, die von Fahrzeugen reflektiert wurden, die sich mit großer Wahrscheinlichkeit bewegen.

In weiteren Ausführungsformen werden mit Hilfe von Filtern die empfangenen Strahlen von kleinen Objekten wie Fußgänger oder Radfahrer ermittelt. Kleine Objekte wie Fußgänger oder Radfahrer bewegen sich in der Regel mit einer Geschwindigkeit in einem Grenzbereich von wenigen Kilometern pro Stunde. Die empfangenen Strahlen, die von kleinen Objekten reflektiert wurden, werden nicht für die Schätzung der Eigengeschwindigkeit verwendet. Dadurch können reflektierte Strahlen von Objekten mit niedriger Geschwindigkeit, wie zum Beispiel Fahrrädern oder Fußgängern, ausgeblendet werden. Somit wird die Wahrscheinlichkeit für die Berücksichtigung von reflektierten Strahlen, die nur von stehenden Objekten reflektiert wurden, erhöht. Dadurch wird die Qualität der Schätzung der Eigengeschwindigkeit verbessert.

In einer Ausführungsform werden die empfangenen Strahlen mit einem RCS Filter verarbeitet. Empfangene Strahlen, die einen RCS Wert aufweisen, der unter einem Vergleichswert liegt, werden nicht für die Schätzung der Eigengeschwindigkeit verwendet. Insbesondere kleine und damit bewegliche Objekte wie beispielsweise Fußgänger weisen im Vergleich zu Gebäuden einen geringen RCS Wert auf. Auch dadurch wird die Wahrscheinlichkeit erhöht, dass nur reflektierte Strahlen von stehenden Objekten für die Schätzung der Eigengeschwindigkeit berücksichtigt werden.

In einer weiteren Ausführungsform wird ein zeitliches Amplitudenverhalten der empfangenen Strahlen ermittelt. Das ermittelte Amplitudenverhalten wird mit einem vorgegebenen Vergleichsverhalten verglichen. Das vorgegebene Vergleichsverhalten kann beispielsweise einer reflektierten Strahlung eines Fußgängers und/oder eines Radfahrers entsprechen. Weist die empfangene Strahlung ein Amplitudenverhalten auf, das eine vorgegebene Ähnlichkeit oder Identität zu dem vorgegebenen Vergleichsverhalten aufweist, so wird die empfangene Strahlung nicht für die Schätzung der Eigengeschwindigkeit verwendet. Auch auf diese Weise wird die Wahrscheinlichkeit erhöht, dass reflektierte Strahlen von sich bewegenden Objekten wie beispielsweise Fußgängern oder Radfahrern, bei der Schätzung der Eigengeschwindigkeit nicht berücksichtigt werden.

In einer weiteren Ausführungsform wird empfangene Strahlung mit einem μ-Dopplerfilter gefiltert, wobei die empfangene Strahlung, die eine vorgegebene Ähnlichkeit oder Identität mit einer vorgegebenen μ-Doppler-Signatur aufweist, nicht für die Schätzung der Eigengeschwindigkeit verwendet wird. Die vorgegebene μ-Dopplersignatur entspricht beispielsweise einem Fußgänger, einem Radfahrer oder einem Fahrzeug, insbesondere einem Zug, LKW oder Auto. Auf diese Weise wird die Wahrscheinlichkeit erhöht, dass reflektierte Strahlung von Fußgängern oder Radfahrern oder anderen sich langsam bewegenden Objekten nicht für die Schätzung der Eigengeschwindigkeit verwendet werden. Auch dadurch wird die Schätzung der Eigengeschwindigkeit verbessert.

In einer Ausführungsform wird die Schätzung der Eigengeschwindigkeit basierend auf den empfangenen reflektierten Strahlen mit Hil1fe eines RANSAC Verfahrens und eines LSQ Schätzverfahrens durchgeführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen

> FIG 1 eine schematische Darstellung einer Messsituation,
> FIG 2 ein Diagramm mit einer Verteilung der relativen Geschwindigkeiten des Egoobjektes über einen Reflexionswinkel,
> FIG 3 eine Messsituation eines Schienenfahrzeuges bei einer Einfahrt in einen Bahnhof mit einem ersten und zweiten räumlichen Bereich für eine Filterung der empfangenen Strahlen,
> FIG 4 eine weitere Messsituation mit einem ersten und zweiten weiteren räumlichen Bereich für eine Filterung der empfangenen Strahlen,
> FIG 5 eine schematische Darstellung eines Ablaufdiagramms zur Durchführung des Verfahrens, und
> FIG 6 einen schematischen Programmablauf einer Ausführungsform eines nicht beanspruchten Verfahrens.

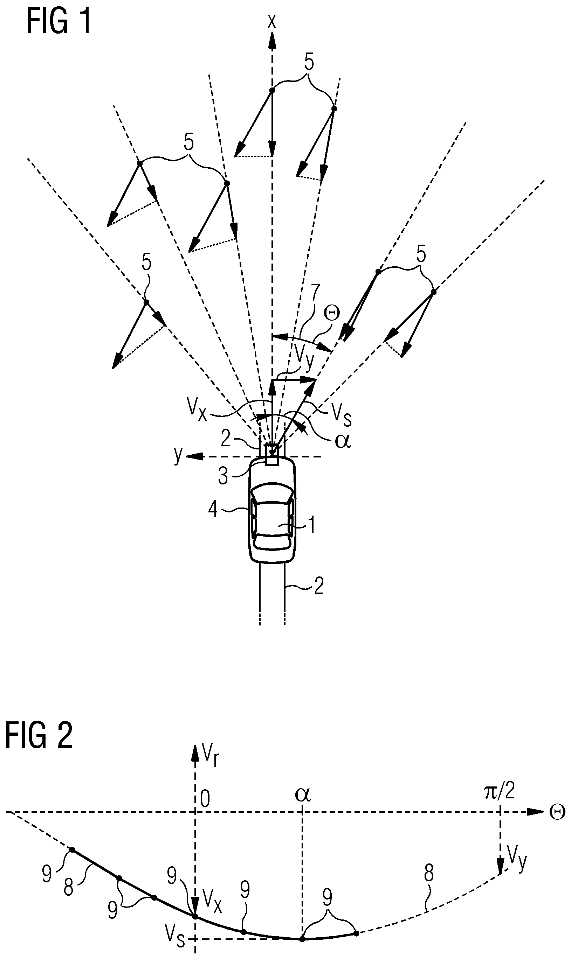

Im Folgenden wird das neue Verfahren anhand von elektromagnetischen Strahlen beschrieben. Das Verfahren kann jedoch auch mithilfe von akustischen Strahlen, d.h. Schallwellen, oder radioaktiven Strahlen durchgeführt werden. FIG 1 zeigt in einer schematischen Darstellung ein Egoobjekt 1, das beispielsweise als Schienenfahrzeug, Zug, LKW oder Auto, oder sonstiges bewegliches Objekt ausgebildet ist. Das Egoobjekt 1 bewegt sich als Schienenfahrzeug auf Schienen 2 entlang einer gestrichelt dargestellten x-Achse. Eine y-Achse steht senkrecht zur x-Achse und ist schematisch mit gestrichelten Linien eingezeichnet. Das Egoobjekt 1 weist einen Sensor 3 auf, der elektromagnetische Strahlung, beispielsweise in Form von Radarstrahlen, Lidarstrahlen oder Laserstrahlen über einen vorgegebenen Winkelbereich aussendet. Beispielsweise kann der Sensor 3 als FMCW-Radarsensor ausgebildet sein. Der Sensor 3 ist gleichzeitig als Empfänger ausgebildet, um reflektierte elektromagnetische Strahlen 6 zu empfangen. Der Sensor 3 ist mit einer Recheneinheit 4 verbunden. Die Recheneinheit 4 steuert den Sensor zur Ausstrahlung von strahlen an und erhält vom Sensor 3 eine Information über einen Empfang von Strahlungen. In anderen Ausführungsformen ist der Sensor 3 ausgebildet, um akustische Strahlen, d.h. Schallwellen, auszusenden und als Empfänger akustische Strahlen zu empfangen. Zudem kann der Sensor auch als radioaktiver Strahler und radioaktiver Empfänger ausgebildet sein.

Die elektromagnetischen Strahlen 6 werden von Reflexionspunkten 5 reflektiert. Die Reflexionspunkte 5 können feststehende Objekte oder bewegliche Objekte sein. Beispielsweise kann mit Hilfe von Strahlen, insbesondere Radarstrahlen und dem Dopplereffekt eine relative Geschwindigkeit zwischen den Reflexionspunkten 5 und dem Egoobjekt 1 von der Recheneinheit 4 mithilfe des Sensors 3 ermittelt werden. Zudem kann von der Recheneinheit 4 ein Reflexionswinkel 7 für die empfangene Strahlung mithilfe des Sensors 3 ermittelt werden. Somit kann in Bezug auf den Sensor 3 jeweils eine gegenüber dem jeweiligen Reflexionspunkt 5 bestehende relative Geschwindigkeit und der dazugehörige Reflexionswinkel 7 von der Recheneinheit 4 nach dem Prinzip des FMCW Radarsensors oder mithilfe eines FMCW Radarsensors erfasst werden. Dazu kann der FMCW Radarsensor 3 wenigstens eine Sendeantenne und wenigstens zwei Empfangsantennen aufweisen. Wird der Reflexionswinkel nur in einer horizontalen Ebene betrachtet, entspricht der Reflexionswinkel 7 einem Azimuthwinkel $\Theta$. Die relative Geschwindigkeit zwischen einem Reflexionspunkt 5 und dem Egoobjekt 1 entspricht der relativen Geschwindigkeit des Egoobjektes 1 gegenüber dem Reflexionspunkt 5, wenn sich der Reflexionspunkt nicht bewegt. Gehört der Reflexionspunkt 5 zu einem sich bewegenden Objekt, entspricht die relative Geschwindigkeit nicht der Geschwindigkeit des Egoobjektes 1. Die tatsächliche Bewegung der Reflexionspunkte ist bei der Messung nicht bekannt. Deshalb besteht eine Aufgabe des Verfahrens darin, die reflektierten Strahlen von Reflexionspunkten, die von einem stehenden Objekt reflektiert wurden, zu ermitteln bzw. die reflektierten Strahlen herauszufiltern, die nicht einem stehenden Objekt reflektiert wurden. In FIG 1 ist für einen Reflexionspunkt 5 die relative Geschwindigkeit $v_s$

des Sensors 3 gegenüber dem Reflexionspunkt 5 eingezeichnet. Die relative Geschwindigkeit weist einen Anteil in x-Richtung $v_x$ und einen Anteil in y-Richtung $v_y$ auf, die ebenfalls eingezeichnet sind.

FIG 2 zeigt in einer schematischen Darstellung ein Diagramm, bei dem die relativen Geschwindigkeiten $v_r$ der Reflexionspunkte 5 der FIG 1 über den Reflexionswinkel $\theta$ aufgetragen sind. Die Geschwindigkeit $v_r$ entspricht der radialen relativen Geschwindigkeit zwischen dem Egoobjekt 1 und den Reflexionspunkten 5. Die einzelnen Messwerte 9 der relativen Geschwindigkeiten $v_r$ können mit mathematischen Methoden zu einer sinusförmigen Geschwindigkeitslinie 8 approximiert werden. Würden die Reflexionspunkte 5 feststehen, so müssten bei einer präzisen Messung der relativen Geschwindigkeit sich eine sinusförmige Geschwindigkeitslinie, d.h. Geschwindigkeitsverteilung ergeben. Die Geschwindigkeitslinie 8 wird durch eine ausgewählte Anzahl von reflektierten Strahlen von Reflexionspunkten von feststehenden Objekten gebildet. Dazu kann das RANSAC-Verfahrens verwendet werden, um die reflektierten Strahlen von ausgewählten Reflexionspunkten auszuwählen. Dann kann beispielsweise die sinusförmige Geschwindigkeitslinie 8 auf Basis der gemessenen relativen Geschwindigkeiten der ausgewählten Strahlungen der ausgewählten Reflexionspunkte mit Hilfe einer Regressionsberechnung ermittelt werden. Dazu kann eine Approximation der sinusförmigen Geschwindigkeitslinie mithilfe einer Optimierung von Fehlerquadraten durchgeführt werden. Das Geschwindigkeitsprofil basierend auf den radialen Geschwindigkeiten $v_{ri}$ und den Azimuthwinkel $\theta_i$ der empfangenen elektromagnetischen Strahlungen $i$ von allen feststehenden Objekten (1 ... N) wird nach folgender Formel ermittelt:

$$\begin{bmatrix} v_{r,1} \\ \vdots \\ v_{r,N} \end{bmatrix} = \begin{bmatrix} \cos(\theta_1) & \sin(\theta_1) \\ \vdots & \vdots \\ \cos(\theta_N) & \sin(\theta_N) \end{bmatrix} \begin{bmatrix} v_x \\ v_y \end{bmatrix}$$

Wobei $\boldsymbol{v_x} = -\cos(\alpha)\boldsymbol{v_s}$ und $\boldsymbol{v_y} = -\sin(\alpha)\boldsymbol{v_s}$.

Die reflektierten Strahlen der Reflexionspunkte, die für die Bestimmung der Geschwindigkeitslinie 9 verwendet werden, können beispielsweise mit einem RANSAC Verfahren, einer Hough Transformation oder einem Random Poll Verfahren ermittelt werden.

Ein Aspekt der vorliegenden Erfindung beruht darin, mit größerer Wahrscheinlichkeit reflektierte Strahlen von Reflexionspunkten von sich bewegenden Objekten bei der Schätzung der Eigengeschwindigkeit des Egoobjektes auszuschließen.

Das Random Sample Consensus (RANSAC) Verfahren wird verwendet, um ein Geschwindigkeitsprofil einer größeren Gruppe von Zielen zu ermitteln. Dabei wird davon ausgegangen, dass die größte Gruppe von Reflexionspunkten zu stationären Objekten gehören. Das RANSAC Verfahren wird verwendet, um Messdaten an ein theoretisches Modell anzupassen. Dabei werden in mehreren Iterationen wenigstens zwei Ziele zufällig gewählt und die Parameter relative Geschwindigkeit und Azimuthwinkel bestimmt. Daraufhin wird ein Fehler eines basierend auf den zwei Messungen ermittelten Geschwindigkeitsprofils relativ zu allen radialen Messungen der Ziele ermittelt. Daraufhin wird ein Wertebereich um das Geschwindigkeitsprofil erstellt, wobei Messwerte außerhalb des Wertebereiches nicht für die Ermittlung des Geschwindigkeitsprofils berücksichtigt werden. In einem folgenden Prozessschritt wird auf Basis aller innerhalb des Wertebereiches liegenden Messungen ein neues Geschwindigkeitsprofil, d.h. eine Geschwindigkeitslinie berechnet. Die letzte Berechnung wird auf Basis des optimalen Wertebereiches ermittelt.

Aus der mit Hilfe der Formel 1 ermittelten Geschwindigkeit $v_{xy}$ kann gemäß der Formel: $\alpha = \tan(v_y, v_x)$ ein Gierwinkel $\alpha$ und anschließend eine Gierrate $\Omega$ ermittelt werden. Bezeichnet I den Abstand zum Drehpunkt des Fahrzeuges, so ergibt sich folgende Gleichung:

$$\sin(\alpha) = \frac{vy}{vs} = \frac{l\Omega}{vs}.$$

$$\Omega = \sin\frac{(\alpha)}{l} \, x \, vs$$

Daraus ergibt sich

Versuche haben gezeigt, dass das im Stand der Technik verwendete RANSAC Verfahren nicht immer zuverlässige Schätzungen der Eigengeschwindigkeit sicherstellt. Dies liegt insbesondere darin begründet, dass im RANSAC Verfahren nach Bewegungsmustern gesucht wird, wobei zwei Annahmen getroffen werden: die häufigsten anzutreffenden Reflexionspunkte sind statisch und Reflexionspunkte, die sich bewegen, folgen ungeordneten bzw. chaotischen Bewegungsmustern. Diese Annahmen treffen jedoch nicht in allen Situationen zu. Beispielsweise führt das RANSAC Verfahren bei der Situation, dass Fahrzeuge gleichzeitig in die gleiche Richtung oder in entgegengesetzte Richtungen losfahren, zu einer schlechten Schätzung der Eigengeschwindigkeit. Auch in der Situation, in der viele Fahrzeuge mit gleichmäßiger Geschwindigkeit fahren, führt dies nach dem RANSAC Verfahren zu einer schlechten Einschätzung der Eigengeschwindigkeit. Auch in Situationen, in denen Fahrzeuge abbiegen, und andere Fahrzeuge entgegenkommen, oder Fahrzeuge beschleunigen oder bremsen, oder Fahrzeuge mit gleichmäßiger Geschwindigkeit entgegenkommen, während Fahrzeuge sich auf einer anderen Seite des Fahrzeuges mit einer gleichmäßigen Geschwindigkeit entfernen, führt dies zu schlechten Ergebnissen bei der Schätzung der Eigengeschwindigkeit.

Mit Hilfe des neuen vorgeschlagenen Verfahrens wird eine verbesserte Auswahl der empfangenen Strahlen erreicht, die für die Schätzung der Eigengeschwindigkeit verwendet werden. Bei dem neu vorgeschlagenen Verfahren können verschiedene Verbesserungen vorgenommen werden, sodass die Wahrscheinlichkeit erhöht wird, dass reflektierte elektromagnetische Strahlen, die bei der Schätzung der Eigengeschwindigkeit berücksichtigt werden, tatsächlich von feststehenden Objekten reflektiert wurden.

Beispielsweise kann die Vorrichtung eine Recheneinheit 4 aufweisen. Die Recheneinheit 4 kann über einen Datenspeicher verfügen, wobei im Datenspeicher eine Karte mit geografischen Angaben von Orten von feststehenden Objekten abgelegt ist. Zudem kann das Fahrzeug über ein Ortungssystem verfügen, wobei das Ortungssystem die absolute Position des Egoobjektes erfasst. Auf diese Weise kann mithilfe der Karte die relative Position des Egoobjektes zu den feststehenden Objekten ermittelt werden kann. Erkennt nun die Recheneinheit 4 aufgrund der empfangenen reflektierten Strahlen in bestimmten Winkelrichtungen 7 Reflexionspunkte 5, so kann die Recheneinheit 4 aus dem Vergleich mit den in der Karte abgelegten Orten der feststehenden Objekte eine Zuordnung der Reflexionspunkte 5 zu den feststehenden Objekten vornehmen. Als Ergebnis kann die Recheneinheit 4 nur die reflektierten Strahlen zur Schätzung der Eigengeschwindigkeit verwenden, die einem feststehenden Objekt der Karte zugeordnet werden können. Somit werden mit Hilfe eines geographischen Matchingverfahrens die empfangenen Strahlen ermittelt, die von feststehenden Objekten reflektiert wurden.

Abhängig von der gewählten Ausführungsform kann anstelle eines geographischen Matchingverfahrens mit Hilfe einer Karte ein zeitliches Matchingverfahren (Bewegungs-Matching) durchgeführt werden, um feststehende Objekte bzw. die reflektierten elektromagnetischen Strahlen von feststehenden Objekten zu identifizieren. Dabei werden von der Recheneinheit 4 eine empfangene elektromagnetische Strahlung und der dazugehörige Reflexionswinkel 7 abgespeichert. Bei einem folgenden Messvorgang wird eine elektromagnetische Strahlung ausgestrahlt und eine vom Reflexionspunkt in einem gemessenen Reflexionswinkel 7 empfangen. Die Recheneinheit 4 überprüft unter Berücksichtigung des geschätzten zurückgelegten Weges des Egofahrzeuges, ob sich der Reflexionswinkel des Reflexionspunktes entsprechend dem zurückgelegten Weg des Egoobjekts bewegt hat. Ist dies der Fall, so hat sich der Reflexionspunkt selbst nicht bewegt. Somit wird dieser Reflexionspunkt einem feststehenden Objekt zugeordnet. Vorzugsweise wird die Veränderung der Position des Reflexionspunktes über mehrere Messungen durchgeführt. Erkennt jedoch die Recheneinheit bei aufeinanderfolgenden Messungen, dass sich der Reflexionswinkel des Reflexionspunktes anders verändert als es aufgrund der Bewegung des Egofahrzeuges zu erwarten ist, so wird eine Bewegung des Reflexionspunktes erkannt und die reflektierte Strahlung dieses Reflexionspunktes einem sich bewegenden Objekt zugeordnet und bei der Schätzung der Eigengeschwindigkeit nicht berücksichtigt. Für ein zeitliches Matching kann beispielsweise ein Track eines Kalman-Filter eingesetzt werden. Das Kalman-Filter ist ein mathematisches Verfahren zur iterativen Schätzung von Systemparametern auf der Basis von fehlerbehafteten Beobachtungen. Das Kalman-Filter dient dazu, nicht direkt messbare Systemgrößen zu schätzen, während die Fehler der Messungen optimal reduziert werden. Bei dynamischen Größen muss dem Filter ein mathematisches Modell als Nebenbedingung hinzugefügt werden, um dynamische Beziehungen zwischen den Systemgrößen zu berücksichtigen. So können beispielsweise Bewegungsgleichungen helfen, veränderliche Positionen und Geschwindigkeiten gemeinsam präzise zu schätzen. Die Besonderheit des Kalman Filter bildet seine spezielle mathematische Struktur, die den Einsatz in Echtzeitsystemen verschiedener technischer Bereiche ermöglicht. Dazu zählen u. a. die Auswertung von Radarsignalen oder GPS-Daten zur Positionsbestimmung sich bewegender Objekte (Tracking). Wird mit Hilfe des Kalman-Filter-Tracking ein Ziel mit dynamischen Eigenschaften erfasst, so wird die empfangene Strahlung dieses Objektes aus der Gruppe gelöscht.

In einer weiteren Ausführungsform wird mit Hilfe von räumlichen Filterverfahren ermittelt, welche empfangenen Strahlen einem stehenden Objekt und welche empfangenen Strahlen einem bewegenden Objekt zugeordnet werden können. Die empfangenen Strahlen von stehenden Objekten werden für die Schätzung der Eigengeschwindigkeit berücksichtigt. Die empfangenen Strahlen von sich bewegenden Objekten werden für die Schätzung der Eigengeschwindigkeit nicht oder mit einer kleineren Gewichtung berücksichtigt.

Erfindungsgemäß ist wenigstens ein erster räumlicher Bereich relativ zum Egoobjekt vorgegeben. Reflektierte Strahlen, die aus dem ersten Bereich reflektiert wurden, werden nicht zur Schätzung der Eigengeschwindigkeit verwendet. Abhängig von der gewählten Ausführungsform können die reflektierten Strahlen, die aus dem ersten Bereich reflektiert wurden, mit einer geringeren Gewichtung zur Schätzung der Eigengeschwindigkeit verwendet werden als empfangene Strahlen aus einem Bereich außerhalb des ersten räumlichen Bereiches. Der erste räumliche Bereich ist beispielsweise in einer digitalen Karte gespeichert. Die Position des Egofahrzeuges kann über eine Ortsbestimmung z.B. mithilfe eines GPS-Systems ermittelt werden. Somit kann die relative Position des Egofahrzeuges zum ersten räumlichen Bereich ermittelt werden. Beispielsweise kann der erste räumliche Bereich einen Bereich in einem Bahnhof festlegen. Da sich im Bahnhofsbereich viele Menschen bewegen, ist die Wahrscheinlichkeit relativ hoch, reflektierte Strahlen von Menschen zu empfangen. Zudem kann der erste räumliche Bereich auch eine Straße abdecken, die z.B. neben Schienen eines Schienenfahrzeuges oder neben einer Straße eines Fahrzeuges verläuft. Da sich auf Straßen Fahrzeuge bewegen, ist die Wahrscheinlichkeit hoch, dass reflektierte Strahlen von sich bewegenden Objekten wie beispielsweise Fahrzeugen, LKWs, Fahrradfahrern oder Motorradfahrern stammen.

In analoger Weise können auch erste räumliche Bereiche für Fahrzeuge als Egoobjekte, wie beispielsweise Schienenfahrzeuge, Autos oder LKWs, festgelegt werden. Beispielsweise können Randbereiche neben Straßen innerhalb einer Stadt, in denen die Wahrscheinlichkeit hoch ist, dass sich dort Fußgänger bewegen, als erste räumliche Bereiche festgelegt werden. Dadurch werden Randbereiche neben Straßen in Städten von der Auswertung von reflektierten elektromagnetischen Strahlen für die Schätzung der Eigengeschwindigkeit ausgenommen. Somit wird Rechenzeit gespart und die Wahrscheinlichkeit, reflektierte Strahlen von bewegenden Objekten für die Schätzung der Eigengeschwindigkeit zu verwenden, reduziert.

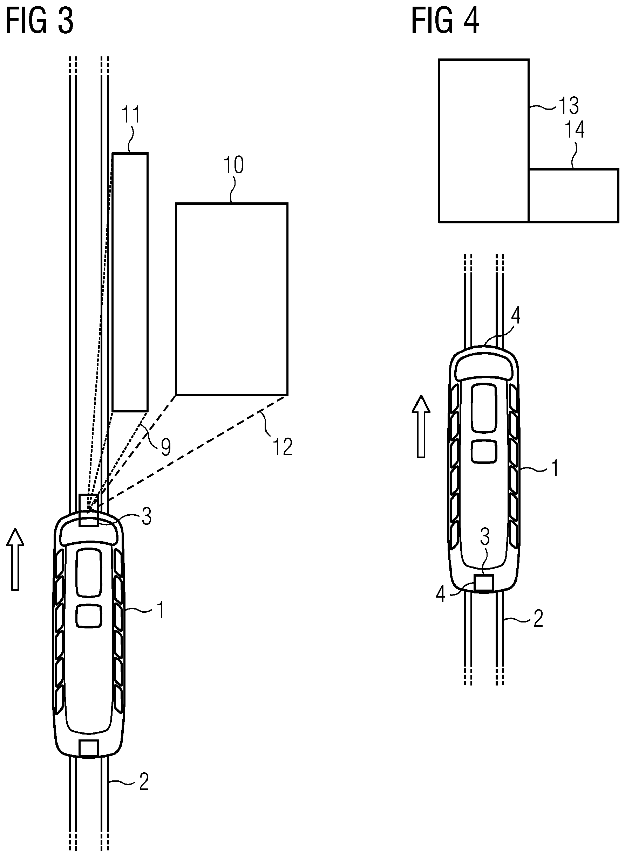

FIG 3 zeigt in einer schematischen Darstellung ein Egoobjekt 1 in Form eines Schienenfahrzeuges, das sich auf Schienen 2 in Richtung auf ein Bahnhofsgebäude 10 bewegt. Zwischen dem Bahnhofsgebäude 10 und den Schienen 2 ist ein Bahnsteig 11 vorgesehen. Auf dem Bahnsteig 11 bewegt sich in der Regel eine Vielzahl von Fußgängern. Somit ist es vorteilhaft, einen ersten räumlichen Bereich 9 vorzusehen, der den Bahnsteig 11 umfasst, wobei der erste Bereich 9 für die Auswertung bzw. Berücksichtigung der reflektierten empfangenen Strahlen für die Schätzung der Eigengeschwindigkeit ausnimmt. Der erste Bereich 9 kann sich abhängig von der Position des Egoobjektes 1 verändern, da sich ein Winkelbereich, der den Bahnsteig 11 erfasst, sich mit dem abnehmenden Abstand zwischen dem Sensor 3 und dem Bahnsteig 11 vergrößert. Diese Information ist beispielsweise in einem Datenspeicher der Recheneinheit 4 in Form einer digitalen Karte abgelegt. Außerhalb des Bahnhofsbereiches wird auf den ersten Bereich verzichtet, da seitlich eines Bahngleises in der Regel keine Fußgänger oder Radfahrer unterwegs sind.

In analoger Weise verhält es sich auch mit einer Fahrsituation eines Fahrzeuges, das durch eine Stadt fährt, wobei seitlich neben der Straße ein Bürgersteig vorgesehen ist, auf dem sich Fußgänger bewegen. Außerhalb der Stadt wird kein erster räumlicher Bereich verwendet, da in der Regel seitlich neben einer Landstraße oder Autobahn keine Fußgänger oder Radfahrer unterwegs sind. In FIG 3 wurde der erste Bereich 9 nur in einer Ebene dargestellt. Abhängig von der gewählten Ausführungsform kann der erste Bereich 9 auch durch zwei Winkelbereiche, die senkrecht aufeinander stehen, festgelegt werden. Zudem können abhängig von der gewählten Ausführungsform mehrere erste räumliche Bereiche vorgesehen sein, die in verschiedenen relativen Positionen zum Egofahrzeug angeordnet sind, wobei reflektierte Strahlen aus den ersten räumlichen Bereichen nicht oder mit geringerer Gewichtung für die Schätzung der Eigengeschwindigkeit des Egofahrzeuges berücksichtigt werden.

In einer weiteren Ausführungsform kann ein zweiter räumlicher Bereich relativ zum Egoobjekt vorgegeben sein. Der zweite räumliche Bereich ist z.B. in einer digitalen Karte abgelegt. Die reflektierten Strahlen, die aus dem zweiten Bereich reflektiert werden, werden mit größerer Gewichtung zur Schätzung der Eigengeschwindigkeit berücksichtigt als reflektierte Strahlen außerhalb des zweiten räumlichen Bereiches. In der Situation der FIG 3 kann dies beispielsweise der dargestellte zweite räumliche Bereich 12 sein. Im zweiten räumlichen Bereich 12 ist relativ zum Sensor 3 des Egoobjektes 1 das Bahnhofsgebäude 10 angeordnet. Somit sind reflektierte Strahlen aus dem zweiten Bereich 12 von einem feststehenden Objekt, d.h. dem Bahnhofsgebäude 10, reflektiert worden. Somit können die empfangenen reflektierten Strahlen des zweiten Bereiches 12 mit sehr großer Wahrscheinlichkeit einem feststehenden Objekt zugeordnet werden. Damit können die reflektierten Strahlen des zweiten Bereiches 12 mit einer größeren Gewichtung für die Schätzung der Eigengeschwindigkeit berücksichtigt werden.

Es können für verschiedene Streckenabschnitte von Schienen oder Straßen oder sonstigen Bereichen unterschiedliche große erste und/oder zweite räumliche Bereiche verwendet werden bzw. erste und/oder zweite räumliche Bereiche oder keine räumlichen Bereiche verwendet werden. Die ersten und/oder zweiten räumlichen Bereiche können in einer zweidimensionalen Karte als Linien oder Winkelbereiche abgespeichert sein. Die ersten und/oder zweiten räumlichen Bereiche können in einer dreidimensionalen Karte als dreidimensionale Räume oder als Flächen, insbesondere als zweidimensionale Winkelbereiche abgelegt sein. Zudem können sich die Ausrichtung und/oder die Größe der Linie, des dreidimensionalen Raums, der Fläche oder des Winkelbereiches abhängig von der Position des Egoobjektes und insbesondere abhängig von der Ausrichtung des Egoobjektes ändern. Somit können in der digitalen Karte die Größe und/oder die Ausrichtung des ersten und/oder zweiten räumlichen Bereiches abhängig von einem relativen Abstand des Egoobjektes zum ersten und/oder zweiten räumlichen Bereich abgespeichert sein. Zudem können in der digitalen Karte die Größe und/oder die Ausrichtung des ersten und/oder zweiten räumlichen Bereiches abhängig von einem relativen Abstand des Egoobjektes und einer Ausrichtung des Egoobjektes, d.h. einer Ausrichtung des Sensors, gegenüber dem ersten und/oder zweiten räumlichen Bereich abgespeichert sein.

Der erste Bereich 9 und/oder der zweite Bereich 12 können, wie bereits ausgeführt, in einer digitalen Karte in Abhängigkeit von der Position des Egoobjektes 1 festgelegt sein. Zudem können der erste Bereich 9 und/oder der zweite Bereich 12 mit Hilfe von vorhergehenden Messungen des Egoobjektes selbst festgelegt werden. Ist beispielsweise das Egoobjekt 1 in Form eines Schienenfahrzeuges bereits einmal an dem Bahnhofsgebäude 10 vorbeigefahren und hat aufgrund der Auswertung der reflektierten empfangenen Strahlen festgestellt, dass im zweiten Bereich 12 alle empfangenen reflektierten elektromagnetischen Strahlen von einem feststehenden Objekt stammen, so wird dieser zweite Bereich 12 in einem entsprechenden Datenspeicher mit Angabe der Fahrrichtung und der Position des Egoobjektes 1 und der Größe des zweiten Bereiches 12 abgelegt. Dies kann beispielsweise durch einen Vergleich, der aufgrund der reflektierten Strahlen des zweiten Bereiches 12 ermittelten relativen Geschwindigkeiten des Egofahrzeuges überprüft werden. Ergibt der Vergleich, dass die relativen Geschwindigkeiten der reflektierten Strahlen des zweiten Bereiches eine Varianz aufweisen, die kleiner als eine vorgegebene erste Varianz ist, so wird der zweite Bereich als stehendes Objekt erkannt. Die Position des zweiten Bereiches wird von der Recheneinheit im Datenspeicher abgelegt.

In analoger Weise kann das Egoobjekt 1 beim Vorbeifahren am Bahnhofsgebäude 10 den ersten Bereich 9 als Bereich erkennen, in dem zwar elektromagnetische Strahlen reflektiert wurden, wobei jedoch die elektromagnetischen Strahlen in einer überwiegenden Anzahl der Reflexionspunkte bewegenden Objekten zugeordnet werden. Dies kann beispielsweise durch einen Vergleich, der aufgrund der reflektierten Strahlen des ersten Bereiches 9 ermittelten relativen Geschwindigkeiten des Egofahrzeuges überprüft werden. Ergibt der Vergleich, dass die relativen Geschwindigkeiten der reflektierten Strahlen des zweiten Bereiches eine Varianz aufweisen, die größer als eine vorgegebene zweite Varianz ist, so wird der erste Bereich als Bereich mit sich bewegenden Objekten erkannt. Die Position des ersten Bereiches wird von der Recheneinheit im Datenspeicher abgelegt. Die zweite Varianz ist größer als die erste Varianz, beispielsweise um 20% größer als die erste Varianz. Somit wird der erste Bereich 9 von der Recheneinheit 4 des Egoobjektes 1 in einem Datenspeicher zusammen mit der Fahrrichtung des Egoobjektes 1 und der Position des Egoobjektes 1 abgespeichert. Somit kann bei einem erneuten Befahren in der gleichen Richtung an der gleichen Position der erste Bereich 9 von der Auswertung der empfangenen elektromagnetischen Strahlen für die Schätzung der Eigengeschwindigkeit ausgenommen werden.

In analoger Weise kann auch eine Recheneinheit 4 eines Fahrzeuges als Egoobjekt 1 erste und/oder zweite Bereiche 9, 12 erfassen und von der Auswertung der elektromagnetischen Strahlen ausnehmen, die Gewichtung der elektromagnetischen Strahlen für die Schätzung der Eigengeschwindigkeit reduzieren oder erhöhen.

FIG 4 zeigt eine weitere Fahrsituation eines Egoobjektes 1, das beispielsweise als Schienenfahrzeug ausgebildet ist und sich auf Schienen 2 bewegt. In einem Datenspeicher der Recheneinheit 4 ist relativ zum Egoobjekt 1 ein erster weiterer räumlicher Bereich 13 und ein zweiter weiterer räumlicher Bereich 14 vorgesehen. Es können für verschiedene Streckenabschnitte von Schienen oder Straßen oder sonstige Bereiche unterschiedliche große erste und/oder zweite weitere räumliche Bereiche verwendet werden bzw. erste und/oder zweite weitere räumliche Bereiche oder keine weiteren räumlichen Bereiche verwendet werden. Die ersten und/oder zweiten weiteren räumlichen Bereiche können in einer zweidimensionalen Karte als Linien oder Winkelbereiche abgespeichert sein. Die ersten und/oder zweiten weiteren räumlichen Bereiche können in einer dreidimensionalen Karte als dreidimensionale Räume oder als Flächen, insbesondere als zweidimensionale Winkelbereiche abgelegt sein. Zudem können sich die Ausrichtung und/oder die Größe der Linie, des dreidimensionalen Raums, der Fläche oder des Winkelbereiches abhängig von der Position des Egoobjektes und insbesondere abhängig von der Ausrichtung des Egoobjektes ändern. Somit können in der digitalen Karte die Größe und/oder die Ausrichtung des ersten und/oder zweiten weiteren räumlichen Bereiches abhängig von einem relativen Abstand des Egoobjektes zum ersten und/oder zweiten weiteren räumlichen Bereich abgespeichert sein. Zudem können in der digitalen Karte die Größe und/oder die Ausrichtung des ersten und/oder zweiten räumlichen Bereiches abhängig von einem relativen Abstand des Egoobjektes und einer Ausrichtung des Egoobjektes, d.h. einer Ausrichtung des Sensors, gegenüber dem ersten und/oder zweiten weiteren räumlichen Bereich abgespeichert sein.

Die Recheneinheit 4 ermittelt mit Hilfe des Sensors 3 eine erste Anzahl von Reflexionspunkten 5 innerhalb des ersten weiteren Bereiches 13, die elektromagnetische Strahlen reflektieren. Zudem ermittelt die Recheneinheit 4 mit Hilfe des Sensors 3 eine zweite Anzahl von empfangenen elektromagnetischen Strahlen von Reflexionspunkten 5, die innerhalb des zweiten weiteren Bereiches 14 liegen. Die erste Anzahl der empfangenen Strahlen wird mit der zweiten Anzahl der empfangenen Strahlen verglichen. Ergibt der Vergleich, dass die erste Anzahl der empfangenen Strahlen einen Vergleichswert über der zweiten Anzahl der empfangenen Strahlen liegt, so werden die empfangenen Strahlen des ersten weiteren Bereiches nicht für die Schätzung der Eigengeschwindigkeit berücksichtigt.

Ergibt der Vergleich zwischen der ersten Anzahl der empfangenen Strahlen und der zweiten Anzahl der empfangenen Strahlen, dass die zweite Anzahl der empfangenen Strahlen mehr als einen weiteren Vergleichswert über der ersten Anzahl der empfangenen Strahlen liegt, so werden die empfangenen Strahlen des zweiten Bereiches nicht für die Schätzung der Eigengeschwindigkeit berücksichtigt.

In einer weiteren Ausführungsform wird für wenigstens einen vorgegebenen weiteren räumlichen Bereich eine Dichte von reflektierten Strahlen von Reflexionspunkten ermittelt. Das heißt, es werden die Reflexionspunkte innerhalb eines weiteren Bereiches pro Flächeneinheit oder Winkeleinheit ermittelt. Ist die Dichte der reflektierten Strahlen des weiteren Bereiches über einem vorgegebenen Grenzwert, so werden in einer Ausführung die reflektierten Strahlen des weiteren Bereiches nicht für die Schätzung der Eigengeschwindigkeit verwendet. Der weitere räumliche Bereich ist analog zu dem ersten und/oder zweiten räumlichen Bereich in einer digitalen Karte abgelegt.

In einer weiteren Ausführung, die jedoch mehr Rechenaufwand benötigt, werden die reflektierten Strahlen der Reflexionspunkte, die in einem weiteren Bereich eine Dichte über dem vorgegebenen Grenzwert haben, mit einem Mikro Doppler Verfahren untersucht. Mit dem Mikro Doppler Verfahren wird untersucht, ob die Reflexionspunkte von einem Fahrzeug stammen. Fahrzeuge und insbesondere die Räder von Fahrzeugen haben eine spezielle Doppler Signatur, die mithilfe des Mikro Doppler Verfahrens ermittelt wird. Stammen die Reflexionspunkte der Strahlen nicht von einem Fahrzeug, dann können die Strahlen des weiteren Bereiches für die Schätzung der Eigengeschwindigkeit verwendet werden und in der Gruppe verbleiben. Stammen die Reflexionspunkte von einem Fahrzeug, dann werden die Strahlen des weiteren Bereiches für die Schätzung der Eigengeschwindigkeit nicht verwendet werden und aus der Gruppe gelöscht. Die weiteren räumlichen Bereiche sind z.B. in einer digitalen Karte abgelegt.

In einer weiteren Ausführungsform werden die empfangenen Strahlen mit Hilfe von Filtern dahingehend überprüft, ob die empfangenen Strahlen von Objekten stammen, die sich mit einer kleinen Geschwindigkeit innerhalb eines vorgegebenen Grenzbereiches nahe Null bewegen. Ergibt die Überprüfung, dass die empfangenen Strahlen von Reflexionspunkten von Objekten stammen, die sich mit einer kleinen Geschwindigkeit von z.B. kleiner als 5 km/h aber größer Null bewegen, so werden die empfangenen Strahlen nicht für die Schätzung der Eigengeschwindigkeit verwendet. Auf diese Weise können reflektierte Strahlen von Fußgängern, Fahrradfahrern usw. herausgefiltert werden.

Für die Überprüfung, ob die empfangenen Strahlen von kleinen Objekten wie Radfahrern oder Fußgänger stammen, kann beispielsweise ein reflektierter Radarquerschnitt (RCS) überprüft werden. Beispielsweise können empfangene Strahlen, die von einem Reflexionspunkt reflektiert wurden, der einen Radarquerschnitt kleiner als einen Vergleichswert aufweist, nicht für die Schätzung der Eigengeschwindigkeit verwendet. Der Vergleichswert wird für die verwendete Strahlung in der Weise gewählt, dass von kleinen Objekten reflektierte Strahlungen, die sich mit großer Wahrscheinlichkeit bewegen wie z.B. Tiere, Menschen, Radfahrer von der Schätzung der Eigengeschwindigkeit ausgenommen werden.

In einer weiteren Ausführungsform wird ein zeitliches Amplitudenverhalten der empfangenen Strahlen ermittelt. Das ermittelte Amplitudenverhalten wird mit einem vorgegebenen Vergleichsverhalten verglichen. Das vorgegebene Vergleichsverhalten entspricht einem Amplitudenverhalten von reflektierten elektromagnetischen Strahlen, die z.B. von Fußgängern, Radfahrern, Tieren usw. reflektiert wurden. Ergibt der Vergleich, dass das zeitliche Amplitudenverhalten der empfangenen Strahlung eine vorgegebene Ähnlichkeit oder Identität zu dem vorgegebenen Vergleichsverhalten aufweist, so wird diese Strahlung nicht für die Schätzung der Eigengeschwindigkeit verwendet.

Zudem kann die empfangene Strahlung mit einem µ-Dopplerfilter gefiltert werden. Weist die empfangene und gefilterte Strahlung eine vorgegebene µ-Doppler-Signatur auf, die insbesondere einer µ-Doppler-Signatur eines Fußgängers, eines Radfahrers oder eines Tieres entspricht, wird die empfangene Strahlung nicht für die Schätzung der Eigengeschwindigkeit verwendet.

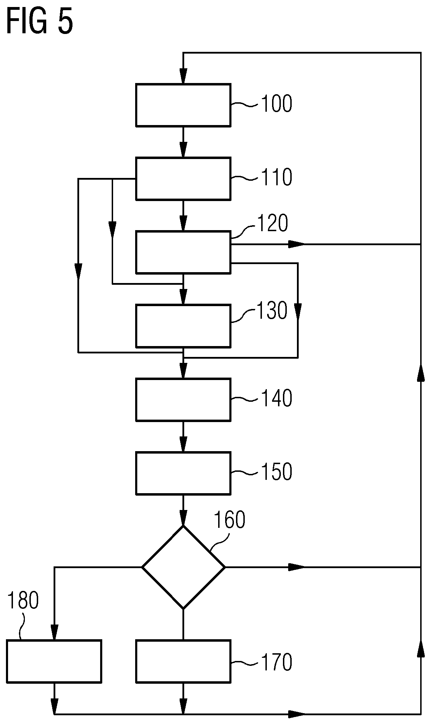

FIG 5 zeigt in einer schematischen Darstellung ein Ablaufdiagramm für eine Ausführungsform eines computerimplementierten Verfahrens, das von der Recheneinheit mit Hilfe des Sensors zum Schätzen einer Eigengeschwindigkeit eines Egoobjektes durchgeführt wird. Bei einem ersten Programmpunkt 100 wird eine elektromagnetische Strahlung in einem vorgegebenen Winkelbereich abgestrahlt und es werden reflektierte Strahlen empfangen, die von Reflexionspunkten reflektiert wurden. Dabei wird für jeden empfangenen Strahl ein Reflexionswinkel in Bezug auf eine Ausrichtung des Sensors erfasst. Der Sensor ist beispielsweise in einer x-Achse ausgerichtet. Somit wird bei einem Messvorgang eine Gruppe von mehreren Strahlen mit deren Reflexionswinkel ermittelt und abgespeichert. Anhand des Verhältnisses zwischen dem ausgesendeten Strahl und dem empfangenen Strahl kann beispielsweise aufgrund der Doppler-Geschwindigkeit für Radarstrahlen eine relative Geschwindigkeit zwischen dem Sensor und dem Reflexionspunkt, von dem der empfangene Strahl reflektiert wurde, ermittelt werden.

Bei einem folgenden Programmpunkt 110 werden mindestens zwei empfangene Strahlen, die relativen Geschwindigkeiten der Strahlen, und deren Reflexionswinkel erfasst. Abhängig von der gewählten Ausführungsform können beim Programmpunkt 110 auch mehr als zwei empfangene Strahlen, deren Einstrahlwinkel und die daraus ermittelten radialen Geschwindigkeiten, erfasst werden. Dabei können beispielsweise Verfahren wie RANSAC Verfahren, Transformationsverfahren oder Random Poll Verfahren verwendet werden, um eine gewisse Anzahl von empfangenen Strahlen, deren Einstrahlwinkel und deren relativen Geschwindigkeiten als Gruppe auszuwählen.

Optional wird bei einem folgenden Programmpunkt 120 überprüft, wie viele der empfangenen Strahlen der Gruppe einem stillstehenden Objekt oder einem sich bewegenden Objekt zugeordnet werden können. Dies kann beispielsweise bei einem RANSAC Verfahren durch den Vergleich von Inlier Messwerten und Outlier Messwerten erfolgen. Übertrifft die Anzahl der sich bewegenden Objekte, also der Reflexionspunkte, einen vorgegebenen Grenzwert wie z.B. 90% der empfangenen Strahlen, so wird die Messung verworfen und es wird zu Programmpunkt 100 zurück verzweigt. Zudem wird zu Programmpunkt 100 zurück verzweigt, wenn die Gruppe weniger als zwei empfangene Strahlungen von zwei Reflexionspunkten aufweist.

Bei dem folgenden Programmpunkt 130 kann mit Hilfe eines Map-Matching-Verfahrens (geografisches Matching) oder eines Track-Matching-Verfahrens (zeitliches Matching) überprüft werden, ob die Reflexionspunkte der empfangenen Strahlungen der Gruppe einem fest stehenden Objekt zugeordnet werden können. Die Map-Matching und Track-Matching-Verfahren wurden bereits genauer erläutert. Bei diesem Verfahrensabschnitt werden die empfangenen Strahlen, die einem bewegten Objekt zugeordnet werden, aus der Gruppe gelöscht und nicht weiter für die Schätzung der Eigengeschwindigkeit verwendet. Der Verfahrensschritt 130 ist optional und muss nicht durchgeführt werden. Somit kann, abhängig von der gewählten Ausführungsform, nach Programmschritt 110 oder Programmschritt 120 direkt zum folgenden Programmschritt 140 verzweigt werden.

Bei Programmschritt 140 werden mit wenigstens einem räumlichen Filter die Strahlungen der Gruppe gefiltert. Dabei ist wenigstens ein erster räumlicher Bereich relativ zum Egoobjekt vorgegeben, wobei empfangene Strahlen, die aus dem ersten Bereich reflektiert wurden, aus der Gruppe gelöscht werden und nicht zur Schätzung der Eigengeschwindigkeit verwendet werden oder mit einer vorgegebenen geringeren Gewichtung als Strahlen außerhalb des ersten räumlichen Bereiches zur Schätzung der Eigengeschwindigkeit verwendet werden. Der erste räumliche Bereich legt einen Bereich fest, in dem kaum oder nur mit geringer Wahrscheinlichkeit feststehende Objekte angeordnet sind.

Zudem kann bei Programmpunkt 140 ein zweiter räumlicher Bereich relativ zum Egoobjekt vorgegeben sein, wobei empfangene Strahlen, die aus dem zweiten Bereich reflektiert wurden, mit einer vorgegebenen größeren Gewichtung zur Schätzung der Eigengeschwindigkeit verwendet werden als reflektierte Strahlen außerhalb des zweiten Bereiches. Der zweite räumliche Bereich legt einen Bereich fest, in dem nur feststehende Objekte angeordnet sind. Der erste und/oder zweite räumliche Bereich können mithilfe von Messungen des Egoobjektes ermittelt werden oder von einer Datenbank oder einer digitalen Karte vorgegeben sein.

Weiterhin sind bei Programmpunkt 140 wenigstens ein erster weiterer räumlicher Bereich relativ zum Egoobjekt und ein zweiter weiterer räumlicher Bereich relativ zum Egoobjekt vorgegeben.

Es wird von der Recheneinheit jeweils eine Anzahl von reflektierten Strahlen für den ersten weiteren Bereich und den zweiten weiteren Bereich ermittelt. Die reflektierten Strahlen des ersten weiteren Bereiches werden nicht für die Schätzung der Eigengeschwindigkeit verwendet und aus der Gruppe gelöscht, wenn die Anzahl der Strahlen des ersten weiteren Bereichs mehr als einen Vergleichswert über der Anzahl des zweiten weiteren Bereichs liegt. Der Vergleichswert kann beispielsweise 50% der Anzahl des zweiten Bereiches sein. Überschreitet also die Anzahl oder die Dichte eines ersten Bereiches um mehr als 50% die Anzahl oder die Dichte der Strahlungen des zweiten Bereiches, so werden die Strahlungen des ersten Bereiches nicht weiter berücksichtigt. Auf diese Weise können zusätzlich reflektierte Strahlungen von Fahrzeugen herausgefiltert werden. Versuche haben gezeigt, dass Fahrzeuge eine relativ hohe Strahlungsdichte gegenüber feststehenden Objekten wie beispielsweise Strommasten, Gebäuden, etc. aufweisen.

In einer weiteren Ausführung kann bei Programmpunkt 140 wenigstens ein weiterer räumlicher Bereich vorgegeben sein. Es wird von der Recheneinheit eine Dichte von reflektierten Strahlen für den weiteren Bereich ermittelt. Die Recheneinheit verwendet die reflektierten Strahlen des weiteren Bereiches nicht für die Schätzung der Eigengeschwindigkeit und löscht die Strahlen aus der Gruppe, wenn die Dichte der reflektierten Strahlen über einem vorgegebenen Grenzwert liegt.

Bei Programmpunkt 140 kann zudem überprüft werden, ob die Dichte der reflektierten Strahlungen innerhalb eines vorgegebenen Bereiches kleiner als ein vorgegebener Wert ist, falls ja, so werden die Strahlungen des Bereiches nicht weiter berücksichtigt. Beispielsweise kann für die untere Grenze der Dichte ein Wert K5 verwendet werden, der ungefähr den Zahlen der reflektierten Strahlungen eines Kleinwagens entspricht. Typischerweise reflektiert ein Kleinwagen für Radarsignale ungefähr 10 Strahlungen. Die Querschnittsfläche eines Kleinwagens beträgt ungefähr 4,5 qm$^2$. Somit ergibt sich für den Wert K5 ein Wert von 10 / 4,5 qm$^2$.

Die räumliche Filterung kann dazu verwendet werden, um eine räumliche Begrenzung des nicht statischen Objekts zu erkennen. Dabei kann die lokale Dichte der Objekte bestimmt werden. Hierbei können verschiedene Ansätze verwendet werden. Beispielsweise können die als statisch angenommenen Inlier eines RANSAC Algorithmus als empfangene Strahlen verwendet werden. Beispielsweise können die empfangenen Strahlen in größere Zellen einsortiert werden. Dabei wird eine Matrix mit vorgegebener Kantenlänge der Zellen angelegt. Die Anzahl der empfangenen Strahlen einer Zelle entspricht der Dichte der Strahlungen der Zelle. In einer weiteren Ausführungsform können die Strahlungen in feinere Zellen einsortiert werden. Dabei wird ein feineres Gitter von Zellen angelegt. Die Größe der Zellen entspricht der Trennbarkeit der einzelnen Objekte des Sensors. Zur Untersuchung von größeren Bereichen kann ein zweidimensionales Filter angelegt werden, das mit dem Gitter gefaltet wird, um die Dichten an verschiedenen Positionen zu ermitteln. Für eine Reduktion des Rechenaufwandes kann sich eine Transformation in den Fourier-Raum zur Berechnung der Faltung empfehlen. Das Ergebnis der Transformation ist ebenfalls ein Gitter, bei dem die Dichte je Zelle angegeben wird. Zudem deutet eine hohe Strahlungsdichte bzw. zu hohe Strahlungsdichte darauf hin, dass es sich um gleichmäßig bewegende Fahrzeuge auf einer Fahrbahn oder Personen auf einem Bahnsteig oder einem Bürgersteig handelt. Somit werden Bereiche, in denen die Dichte der Strahlungen einen vorgegebenen Grenzwert überschreitet, von der weiteren Berechnung der Eigengeschwindigkeit ausgenommen.

In einer weiteren Ausführungsform kann bei Programmpunkt 140 überprüft werden, ob die maximale Dimension eines Objektes der reflektierten Strahlen größer als maximale Abmessungen eines dynamischen Zieles wie z.B. eines LKWs ist. Weist ein Objekt eine Größe auf, die z.B. größer als 15 Meter mal 3 Meter ist, so wird das Objekt als stehendes Objekt identifiziert. Damit werden die reflektierten Strahlen des stehenden Objektes für die Schätzung der Eigengeschwindigkeit verwendet.

Abhängig von der gewählten Ausführung kann nach Programmpunkt 140 direkt nach Programmpunkt 170 verzweigt werden.

In einer anderen Ausführung werden die noch verbleibenden Strahlen der Gruppe in einem weiteren Verfahrensschritt 150 einer Filterung unterzogen. Dabei können mithilfe von Filtern Strahlungen der Gruppe dahingehend überprüft werden, ob sie von Objekten mit einer Geschwindigkeit in einem Grenzbereich nahe Null reflektiert wurden. Die Strahlungen, die von Objekten mit einer Geschwindigkeit im Grenzbereich nahe null reflektiert wurden, werden aus der Gruppe gelöscht und nicht für die Schätzung der Eigengeschwindigkeit verwendet werden.

Beispielsweise können reflektierte und empfangene Strahlen dahingehend überprüft werden, wie groß der Radarquerschnitt (RCS) des Reflexionspunktes der Strahlung ist. Liegt der Radarquerschnitt des Reflexionspunktes der empfangenen Strahlung unter einem RCS Vergleichswert, dann wird die Strahlung aus der Gruppe gelöscht und nicht für die Schätzung der Eigengeschwindigkeit verwendet werden.

In einer weiteren Ausführung wird ein Amplitudenverhalten der empfangenen Strahlungen der Reflexionspunkte ermittelt wird. Das ermittelte Amplitudenverhalten wird mit einem vorgegebenen Vergleichsverhalten verglichen wird. Das Vergleichsverhalten entspricht einem Fußgänger, einem Radfahrer, einem Motorradfahrer oder einem Fahrzeug. Weist die empfangene Strahlung ein Amplitudenverhalten auf, das eine vorgegebene Ähnlichkeit oder Identität zu dem vorgegebenen Vergleichsverhalten aufweist, wird die Strahlung aus der Gruppe gelöscht und nicht für die Schätzung der Eigengeschwindigkeit verwendet.

In einer weiteren Ausführung wird die empfangene Strahlung mit einem μ-Dopplfilter gefiltert. Die gefilterte Strahlung wird mit einer vorgegebenen μ-Doppler-Signatur verglichen, die insbesondere einem Fußgänger oder einem Radfahrer entspricht. Weist die μ-Doppler-Signatur der Strahlung eine vorgegebene Ähnlichkeit mit der vorgegebenen μ-Doppler-Signatur auf, so wir die Strahlung aus der Gruppe gelöscht und nicht für die Schätzung der Eigengeschwindigkeit verwendet. Statische Objekte weisen zumindest im Betrachtungszeitraum einer Pulsfolge, d.h. einer Messreihe, ein stetiges Verhalten auf. Im Gegensatz dazu weisen nach einer μ-Doppler-Filterung Verkehrsteilnehmer wie Radfahrer und Fußgänger eine Signatur auf, die sich charakteristisch von der Signatur eines statischen Objektes unterscheidet. Somit können auch auf diese Weise empfangene Strahlungen von sich bewegenden Objekten herausgefiltert werden.

Bei einem folgenden Programmpunkt 160 wird überprüft, ob die Gruppe von Strahlen sich eine Schätzung der Eigengeschwindigkeit eignen. Dies ist der Fall, wenn mehr als eine vorgegeben Anzahl, z.B. wenigstens zwei empfangene Strahlen von zwei Reflexionspunkten noch in der Gruppe ist und die relativen Geschwindigkeit, die aufgrund der Strahlen der Gruppe ermittelt werden, nicht widersprüchlich sind. Für die Überprüfung der Widersprüchlichkeit können verschiedene Grenzwerte abgelegt sein. Beispielsweise sind die relativen Geschwindigkeiten widersprüchlich, wenn eine relative Geschwindigkeit positiv und eine andere relative Geschwindigkeit negativ ist. Zudem sind zwei relative Geschwindigkeiten widersprüchlich, wenn sie einen Reflexionswinkel aufweisen, der sich um weniger als 5° unterscheidet und die relativen Geschwindigkeiten einen Unterschied von mehr als 20% aufweisen. Sind die Strahlen der Gruppe nicht widersprüchlich, so wird nach Programmpunkt 170 verzweigt.

Bei Programmpunkt 170 wird anhand der verbliebenen Strahlen der Gruppe und der sich daraus errechneten relativen Geschwindigkeiten ein Geschwindigkeitsprofil für die relative Bewegung des Egoobjektes gegenüber den Reflexionspunkten gemäß FIG 2 ermittelt. Für die Approximation der Geschwindigkeitslinie aufgrund der relativen Geschwindigkeiten der Strahlen der Gruppe und deren Reflexionswinkel wird beispielsweise ein Regressionsverfahren wie z.B. das kleinste Quadrate Verfahren (LSQ Verfahren) verwendet. Die LSQ Methode der kleinsten Quadrate (*method of least squares*) ist das mathematische Standardverfahren zur Ausgleichsrechnung. Dabei wird zu einer Menge von Datenpunkten eine Funktion, d.h. die Geschwindigkeitslinie bestimmt, die möglichst nahe an den Datenpunkten verläuft und somit die Daten bestmöglich zusammenfasst.

Anhand der approximierten Geschwindigkeitslinie gemäß FIG 2 kann bei dem Reflexionswinkel von 0° die geschätzte Geschwindigkeit des Sensors entlang der x-Achse abgelesen werden. Die Geschwindigkeitslinie gibt für den Reflexionswinkel von 0° die geschätzte Geschwindigkeit des Sensors an. Anschließend wird zu Programmpunkt 100 zurück verzweigt.

Abhängig von der gewählten Ausführungsform können anstelle des kleinsten Quadrate Verfahrens auch andere Approximationsverfahren verwendet werden, um die Geschwindigkeitslinie aufgrund der empfangenen Strahlen, deren Reflexionswinkel und deren relativer Geschwindigkeiten zu ermitteln.

Ergibt die Abfrage beim Programmpunkt 160, dass keine Strahlen mehr in der Gruppe vorliegen, so wird die Messung verworfen und zu Programmpunkt 100 zurückverzweigt.

Ergibt zudem die Abfrage beim Programmpunkt 160, dass die verbleibenden Strahlen der Gruppe widersprüchlich sind, so wird zu Programmpunkt 100 zurückverzweigt oder abhängig von der gewählten Ausführung kann auch zu einem Programmpunkt 180 verzweigt werden.

Bei Programmpunkt 180 wird ein Multi-Hypothesen-Tracking über die Zeit durchgeführt, um eventuell für einen späteren Zeitpunkt widersprüchliche Messungen für die Schätzung der Eigengeschwindigkeit berücksichtigen zu können.

Mit Hilfe der beschriebenen Verfahren können Randbedingungen des Schienenverkehrs und/oder Randbedingungen des Fahrzeugverkehrs, die charakteristisch sind, dazu berücksichtigt werden, um eine bessere Auswahl der empfangenen Strahlungen für die Schätzung der Eigengeschwindigkeit vorzunehmen.

Die geschätzte Eigengeschwindigkeit kann als zusätzliche Information verwendet werden, um eine Steuergröße des Egoobjektes, beispielsweise einen Antrieb oder eine Bremse, anzusteuern. Zudem kann die geschätzte Eigengeschwindigkeit verwendet werden, um eine Messung eines Geschwindigkeitssensors des Egoobjektes zu verifizieren.

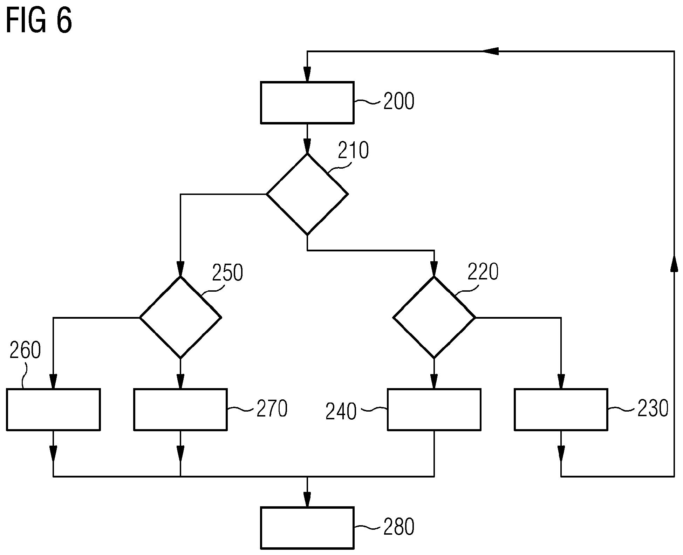

FIG 6 zeigt einen schematischen Programmablauf einer Ausführungsform eines nicht beanspruchten computerimplementierten Verfahrens zur Schätzung der Eigengeschwindigkeit, das von der Recheneinheit unter Verwendung des Sensors ausgeführt werden kann.

Bei Programmpunkt 200 werden bei einem Messvorgang vom Egoobjekt Strahlen ausgesandt und reflektierte Strahlen empfangen. Die empfangenen Strahlen werden einer Gruppe zugeordnet. Die Gruppe weist wenigstens zwei Strahlen auf. Anschließend wird geprüft, ob wenigstens ein empfangener Strahl von einem bewegten Objekt reflektiert wurde. Dazu kann eines der vorab beschriebenen Verfahren verwendet werden. Wurde kein empfangener Strahl von einem bewegten Objekt reflektiert, dann können die Strahlen zur Schätzung der Eigengeschwindigkeit mithilfe eines Regressionsverfahrens und dem Modell gemäß FIG 2 verwendet werden.

Wurde jedoch wenigstens ein Strahl der Gruppe von einem bewegten Objekt reflektiert, dann wird zu Programmpunkt 210 verzweigt. Bei Programmpunkt 210 wird anhand der Strahlen der Gruppe eine Egogeschwindigkeit des Egoobjektes mithilfe eines Regressionsverfahrens und dem Modell der FIG 2 geschätzt und mit einer realen Geschwindigkeit verglichen. Die reale Geschwindigkeit kann z.B. mithilfe eines GPS-Systems oder einer Odometriemessung ermittelt werden. Ergibt der Vergleich, dass die geschätzte Geschwindigkeit mehr als einen vorgegebenen Wert von der realen Geschwindigkeit abweicht, so wird zu Programmpunkt 220 verzweigt.

Bei Programmpunkt 220 wird beispielsweise mithilfe eines geografischen und/oder zeitlichen Matching Verfahrens geprüft, ob sich wenigstens ein Objekt der Objekte, die einen Strahl der Gruppe reflektiert haben, bewegt. Ist dies der Fall, so wird die Gruppe von empfangenen Strahlen bei Programmpunkt 230 verworfen und es wird zu Programmpunkt 200 zurück verzweigt. Für die Überprüfung bei Programmpunkt 220 kann beispielsweise ein Zuverlässigkeitsbereich einer Kalman Filterung verwendet werden.

Ergibt die Abfrage bei Programmpunkt 220, dass die Strahlen der Gruppe nicht von einem bewegten Objekt stammen, so wird zu Programmpunkt 240 verzweigt. Bei Programmpunkt 240 wird mithilfe eines Größenfilters geprüft, ob die Größen der Objekte, die die Strahlen der Gruppe reflektiert haben, einem stehenden Objekt wie z.B. einem Gebäude oder einem kleineren Objekt wie z.B. einem Zug, LKW, Auto, Motorrad, Fahrrad oder einem Fußgänger zugeordnet werden können. Die Überprüfung der Größe des reflektierenden Objektes kann z.B. durch die Anzahl der Reflexionspunkte in einem Flächenbereich überprüft werden. Die Strahlen, die von kleineren Objekten reflektiert wurden, werden aus der Gruppe gelöscht. Anschließend wird zu Programmpunkt 280 verzweigt und anhand der Strahlungen der Gruppe die Eigengeschwindigkeit des Egoobjektes mit einem Regressionsverfahren und dem Modell der FIG 2 geschätzt.

Ergibt die Abfrage bei Programmpunkt 210, dass die geschätzte Geschwindigkeit weniger als den vorgegebenen Wert von der realen Geschwindigkeit abweicht, so wird zu Programmpunkt 250 verzweigt.

Bei Programmpunkt 250 wird geprüft, ob die Objekte der Strahlungen der Gruppe im Mittel keine Geschwindigkeit aufweisen. Ist dies der Fall, so wird zu Programmpunkt 260 verzweigt. Bei Programmpunkt 260 werden mithilfe einer RCS Filterung und/oder einer Mikro Doppler Filterung Strahlungen von kleinen Objekten wie Fußgänger, Radfahrer und/oder Fahrzeugen wie Autos oder LKW oder Zügen ermittelt und aus der Gruppe entfernt. Anschließend wird zu Programmpunkt 280 verzweigt.

Ergibt die Abfrage bei Programmpunkt 250, dass die Objekte der Strahlungen der Gruppe im Mittel eine Geschwindigkeit ungleich Null aufweisen, so wird zu Programmpunkt 270 verzweigt. Bei Programmpunkt 270 werden mit einer räumlichen Filterung Strahlungen von kleinen Objekten wie Fußgängern und Radfahrern und von Objekten wie Fahrzeugen, die sich mit großer Wahrscheinlichkeit bewegen, ermittelt und aus der Gruppe entfernt. Anschließend wird zu Programmpunkt 280 verzweigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Egoobjekt |
| 2 | Schienen |
| 3 | Sensor |
| 4 | Recheneinheit |
| 5 | Reflexionspunkt |
| 6 | Elektromagnetische Strahlung |
| 7 | Reflexionswinkel |
| 8 | Geschwindigkeitslinie |
| 9 | Erster Bereich |
| 10 | Bahnhofsgebäude |
| 11 | Bahnsteig |
| 12 | Zweiter Bereich |
| 13 | Erster weiterer Bereich |
| 14 | Zweiter weiterer Bereich |

**Patentansprüche**

1. Verfahren zum Schätzen einer Eigengeschwindigkeit eines Egoobjektes (1), insbesondere eines Zuges, wobei Strahlen vom Egoobjekt (1) ausgesendet werden, wobei reflektierte Strahlen (6) vom Egoobjekt (1) empfangen werden, wobei die empfangenen Strahlen (6) dahingehend überprüft werden, ob die Strahlen (6) von einem stehenden oder sich bewegenden Objekt reflektiert wurden, und wobei für die Schätzung der Eigengeschwindigkeit die Strahlen (6) verwendet werden, die von stehenden Objekten reflektiert wurden, wobei wenigstens ein erster räumlicher Bereich (9) relativ zum Egoobjekt (1) vorgegeben ist, wobei empfangene Strahlen (6), die aus dem ersten Bereich (9) reflektiert wurden, nicht zur Schätzung der Eigengeschwindigkeit oder mit geringerer Gewichtung zur Schätzung der Eigengeschwindigkeit verwendet werden, **dadurch gekennzeichnet, dass** wenigstens ein erster weiterer räumlicher Bereich (13) relativ zum Egoobjekt (1) und ein zweiter weiterer räumlicher Bereich (14) relativ zum Egoobjekt (1) vorgegeben sind, wobei jeweils eine Anzahl von reflektierten Strahlen (6) für den ersten weiteren Bereich (13) und den zweiten weiteren Bereich (14) ermittelt wird, wobei die reflektierten Strahlen (6) des ersten weiteren Bereiches (13) nicht für die Schätzung der Eigengeschwindigkeit verwendet werden, wenn die Anzahl der Strahlen (6) des ersten weiteren Bereichs (13) mehr als einen Vergleichswert über der Anzahl des zweiten weiteren Bereichs (14) liegt.

2. Verfahren nach Anspruch 1, wobei von den empfangenen Strahlen (6) mit einem geografischen und/oder einem zeitlichen Matchingverfahren die empfangenen Strahlen (6) ermittelt werden, die von stehenden Objekten reflektiert wurden, wobei die ermittelten Strahlen (6), die von stehenden Objekten reflektiert wurden, für eine Schätzung der Eigengeschwindigkeit verwendet werden.

3. Verfahren nach einem der vorhergehenden Ansprüche, wobei ein zweiter räumlicher Bereich (12) relativ zum Egoobjekt (1) vorgegeben ist, wobei empfangene Strahlen (6), die aus dem zweiten Bereich (12) reflektiert wurden, mit größerer Gewichtung zur Schätzung der Eigengeschwindigkeit verwendet werden als reflektierte Strahlen (6) außerhalb des zweiten Bereiches (12).

4. Verfahren nach einem der vorhergehenden Ansprüche, wobei der erste (9) und/oder zweite räumliche Bereich (12) mithilfe von Messungen des Egoobjektes (1), insbesondere mithilfe eines geografischen und/oder zeitlichen Matchingverfahren ermittelt werden.

5. Verfahren nach einem der vorhergehenden Ansprüche, wobei der erste (9) und/oder der zweite Bereich (12) von einem Datenspeicher, insbesondere von einer digitalen Karte bereitgestellt werden.

6. Verfahren nach einem der vorhergehenden Ansprüche, wobei wenigstens ein weiterer räumlicher Bereich vorgegeben ist, wobei eine Dichte von reflektierten Strahlen (6) für den weiteren Bereich ermittelt wird, wobei die reflektierten Strahlen (6) des weiteren Bereiches nicht für die Schätzung der Eigengeschwindigkeit verwendet werden, wenn eine Dichte der reflektierten Strahlen (6) über einem vorgegebenen Grenzwert liegt.

7. Verfahren nach einem der vorhergehenden Ansprüche, wobei die empfangenen Strahlen (6) mit einem RCS Filter verarbeitet werden, und wobei die empfangenen Strahlen (6) mit einem RCS Wert unter einem RCS Vergleichswert nicht für die Schätzung der Eigengeschwindigkeit verwendet werden.

8. Verfahren nach einem der vorhergehenden Ansprüche, wobei ein Amplitudenverhalten der empfangenen Strahlen (6) ermittelt wird, wobei das ermittelte Amplitudenverhalten mit einem vorgegebenen Vergleichsverhalten verglichen wird, wobei insbesondere das Vergleichsverhalten einem Fußgänger oder einem Radfahrer entspricht, wobei die empfangen Strahlung (6), die ein Amplitudenverhalten aufweist, das eine vorgegebene Ähnlichkeit oder Identität zu dem vorgegebenen Vergleichsverhalten aufweist, nicht für die Schätzung der Eigengeschwindigkeit verwendet wird.

9. Verfahren nach einem der vorhergehenden Ansprüche, wobei die empfangene Strahlung (6) mit einem μ-Dopplerfilter gefiltert wird, wobei die empfangene Strahlung (6), die eine vorgegebene μ-Doppler-Sig-

natur aufweist, die insbesondere einem Fußgänger oder einem Radfahrer entspricht, nicht für die Schätzung der Eigengeschwindigkeit verwendet wird.

10. Verfahren nach einem der vorhergehenden Ansprüche, wobei mithilfe eines RANSAC Verfahrens und eines LSQ Schätzverfahrens die Eigengeschwindigkeit des Egoobjektes (1) anhand der herausgefilterten Strahlung (6) geschätzt wird.

11. Computerprogrammprodukt, umfassend Befehle, die bei der Ausführung des Programms durch eine Recheneinheit (4) mit Hilfe eines Sensors (3), der zum Aussenden elektromagnetischer Strahlung in einen vorgegebenen Winkelbereich und zum Empfangen reflektierter elektromagnetischer Strahlen (6) eingerichtet ist, die Recheneinheit (4) veranlassen, das Verfahren gemäß einem der vorhergehenden Ansprüche auszuführen.

12. Vorrichtung zum Schätzen einer Eigengeschwindigkeit eines Egoobjektes (1), insbesondere eines Zuges, wobei die Vorrichtung ausgebildet ist, um ein Verfahren nach einem der Ansprüche 1 bis 10 auszuführen.

**Claims**

1. Method for estimating an airspeed of an ego object (1), in particular a train, wherein rays are emitted by the ego object (1), wherein reflected rays (6) are received by the ego object (1), wherein the received rays (6) are reviewed in terms of whether the rays (6) were reflected by a stationary or moving object, and wherein the rays (6) which were reflected by stationary objects are used for the estimation of the airspeed, wherein at least one first spatial region (9) relative to the ego object (1) is specified, wherein received rays (6) which were reflected from the first region (9) are not used for the estimation of the airspeed or are used with lower weighting for the estimation of the airspeed, **characterised in that** at least a first further spatial region (13) relative to the ego object (1) and a second further spatial region (14) relative to the ego object (1) are specified, wherein in each case a number of reflected rays (6) for the first further region (13) and the second further region (14) are ascertained, wherein the reflected rays (6) of the first further region (13) are not used for the estimation of the airspeed if the number of rays (6) of the first further region (13) lies above the number of the second further region (14) by more than a comparison value.

2. Method according to claim 1, wherein, from the received rays (6) with a geographical and/or a temporal matching method, the received rays (6) which were reflected by stationary objects are ascertained, wherein the ascertained rays (6) which were reflected by stationary objects are used for an estimation of the airspeed.

3. Method according to one of the preceding claims, wherein a second spatial region (12) relative to the ego object (1) is specified, wherein received rays (6) which were reflected from the second region (12) are used with greater weighting for the estimation of the airspeed than reflected rays (6) outside the second region (12).

4. Method according to one of the preceding claims, wherein the first (9) and/or second spatial region (12) are ascertained with the aid of measurements of the ego object (1), in particular with the aid of a geographic and/or temporal matching method.

5. Method according to one of the preceding claims, wherein the first (9) and/or the second region (12) are provided by a data storage device, in particular by a digital map.

6. Method according to one of the preceding claims, wherein at least one further spatial region is specified, wherein a density of reflected rays (6) for the further region is ascertained, wherein the reflected rays (6) of the further region are not used for the estimation of the airspeed if a density of the reflected rays (6) lies above a specified limit value.

7. Method according to one of the preceding claims, wherein the received rays (6) are processed by an RCS filter, and wherein the received rays (6) with an RCS value below an RCS comparison value are not used for the estimation of the airspeed.

8. Method according to one of the preceding claims, wherein an amplitude behaviour of the received rays (6) is ascertained, wherein the ascertained amplitude behaviour is compared with a specified comparison behaviour, wherein in particular the comparison behaviour corresponds to a pedestrian or a cyclist, wherein the received radiation (6) which has an amplitude behaviour that has a specified similarity or identity to the specified comparison behaviour is not used for the estimation of the airspeed.

9. Method according to one of the preceding claims, wherein the received radiation (6) is filtered by a μ Doppler filter, wherein the received radiation (6) which has a specified μ Doppler signature that corresponds in particular to a pedestrian or a cyclist is not used for the estimation of the airspeed.

10. Method according to one of the preceding claims, wherein the airspeed of the ego object (1) is estimated on the basis of the filtered-out radiation (6) with the aid of a RANSAC method and an LSQ estimation method.

11. Computer program product, comprising commands which, when the program is executed by a computing unit (4) with the aid of a sensor (3), which is configured to emit electromagnetic radiation in a specified angular range and to receive reflected electromagnetic rays (6), prompt the computing unit (4) to carry out the method according to one of the preceding claims.

12. Apparatus for estimating an airspeed of an ego object (1), in particular a train, wherein the apparatus is embodied to carry out a method according to one of claims 1 to 10.

**Revendications**

1. Procédé d'évaluation d'une vitesse propre d'un éco-objet (1), en particulier d'un train, dans lequel on émet des rayons de l'éco-objet (1), dans lequel on reçoit des rayons (6) réfléchis de l'éco-objet (1), dans lequel on contrôle les rayons (6) réfléchis sur le point de savoir, si les rayons (6) ont été réfléchis par un objet fixe ou par un objet en mouvement, et dans lequel on utilise pour l'évaluation de la vitesse propre les rayons (6), qui ont été réfléchis par des objets fixes, dans lequel on se donne à l'avance au moins une première partie (9) de l'espace relativement à l'éco-objet (1), dans lequel on n'utilise pas pour l'évaluation de la vitesse propre ou on n'utilise qu'avec une pondération plus petite pour l'évaluation de la vitesse propre des rayons (6) reçus, qui ont été réfléchis par la première partie (9),
**caractérisé en ce que** l'on se donne à l'avance au moins une première autre partie (13) de l'espace relativement à l'éco-objet (1) et une deuxième autre partie (14) de l'espace relativement à l'objet (1), dans lequel on détermine respectivement un nombre de rayons (6) réfléchis pour la première autre partie (13) et la deuxième autre partie (14), dans lequel on n'utilise pas pour l'évaluation de la vitesse propre les rayons (6) réfléchis de la première autre partie (13), si le nombre des rayons (6) de la première autre partie (13) est de plus d'une valeur de comparaison supérieure au nombre de la deuxième autre partie (14).

2. Procédé suivant la revendication 1, dans lequel on détermine parmi les rayons (6) reçus par un procédé de correspondance géographique et/ou temporelle, les rayons (6) reçus, qui ont été réfléchis par des objets fixes, dans lequel on utilise pour une évaluation de la vitesse propre les rayons (6) déterminés, qui ont été réfléchis par des objets fixes.

3. Procédé suivant l'une des revendications précédentes, dans lequel on se donne à l'avance une deuxième partie (12) de l'espace relativement à l'éco-objet (1), dans lequel on utilise pour l'évaluation de la vitesse propre, des rayons (6) reçus, qui ont été réfléchis par la deuxième partie (12) avec une pondération plus grande que des rayons (6) réfléchis en dehors de la deuxième partie (12).

4. Procédé suivant l'une des revendications précédentes, dans lequel on détermine la première (9) et/ou la deuxième partie (12) dans l'espace à l'aide de mesures de l'éco-objet (1), en particulier à l'aide d'un procédé de correspondance géographique et/ou temporel.

5. Procédé suivant l'une des revendications précédentes, dans lequel on se procure la première (9) et/ou la deuxième partie (12) par une mémoire de données, en particulier par une carte numérique.

6. Procédé suivant l'une des revendications précédentes, dans lequel on se donne à l'avance au moins une autre partie de l'espace, dans lequel on détermine une densité de rayons (6) réfléchis pour l'autre partie, dans lequel on n'utilise pas pour l'évaluation de la vitesse propre les rayons (6) réfléchis de l'autre partie, si une densité des rayons (6) réfléchis est supérieure à une valeur limite donnée à l'avance.

7. Procédé suivant l'une des revendications précédentes, dans lequel on traite les rayons (6) réfléchis par un filtre RCS, et dans lequel on n'utilise pas pour l'évaluation de la vitesse propre les rayons (6) reçus ayant une valeur RCS en-dessous d'une valeur de comparaison RCS.

8. Procédé suivant l'une des revendications précédentes, dans lequel on détermine un comportement en amplitude des rayons (6) reçus, dans lequel on compare le comportement en amplitude déterminé à un comportement de comparaison donné à l'avance, dans lequel en particulier le comportement de comparaison correspond à un piéton ou à un cycliste, dans lequel le rayonnement (6) reçu, qui a le comportement en amplitude, qui a une similitude donnée à l'avance ou une identité donnée à l'avance avec le comportement de comparaison donné à l'avance, n'est pas utilisé pour l'évaluation de la vitesse propre.

9. Procédé suivant l'une des revendications précédentes, dans lequel on filtre le rayonnement (6) reçu par un filtre doppler $\mu$, dans lequel on n'utilise pas pour l'évaluation de la vitesse propre le rayonnement (6) reçu, qui a une signature Doppler $\mu$ donnée à l'avance, qui correspond en particulier à un piéton ou à un cycliste.

**10.** Procédé suivant l'une des revendications précédentes, dans lequel on évalue à l'aide d'un procédé RANSAC et d'un procédé d'évaluation LSQ la vitesse propre de l'éco-objet (1) au moyen du rayonnement (6) filtré.

**11.** Produit de programme d'ordinateur, comprenant des instructions, qui lors de l'exécution du programme par une unité (4) informatique, à l'aide d'un capteur (3), qui est agencé pour émettre du rayonnement électromagnétique dans une partie angulaire donnée à l'avance et pour la réception de rayons (6) électromagnétiques réfléchis, font que l'unité (4) informatique exécute le procédé suivant l'une des revendications précédentes.

**12.** Dispositif d'évaluation d'une vitesse propre d'un éco-objet (1), en particulier d'un train, dans lequel le dispositif est constitué pour exécuter un procédé suivant l'une des revendications 1 à 10.

FIG 1

FIG 2

FIG 3

FIG 4

FIG 5

FIG 6

**IN DER BESCHREIBUNG AUFGEFÜHRTE DOKUMENTE**

**In der Beschreibung aufgeführte Patentdokumente**

- DE 102012200139 A1
- DE 102015116434 A1
- JP 2019007926 A
- DE 102017211432 A1

**In der Beschreibung aufgeführte Nicht-Patentliteratur**

- Instantaneous Ego-Motion Estimation using Doppler Radar. *Proceedings of the 16th International IEEE Annual Conference on Intelligent Transportation Systems, The Hague, The Netherlands*, 06 October 2013, 869-874